(19) Europäisches Patentamt
European Patent Office
Office européen des brevets

(11) **EP 1 597 133 B1**

(12) **FASCICULE DE BREVET EUROPEEN**

(45) Date de publication et mention de la délivrance du brevet:
**02.01.2008 Bulletin 2008/01**

(51) Int Cl.:
***B62D 15/02*** *(2006.01)*     ***G01D 18/00*** *(2006.01)*
***G01D 21/02*** *(2006.01)*

(21) Numéro de dépôt: **04714353.2**

(22) Date de dépôt: **25.02.2004**

(86) Numéro de dépôt international:
**PCT/FR2004/000427**

(87) Numéro de publication internationale:
**WO 2004/077065 (10.09.2004 Gazette 2004/37)**

(54) **PROCEDE ET SYSTEME D'ESTIMATION DE LA POSITION ANGULAIRE D'UN VOLANT DE VEHICULE AUTOMOBILE**

VERFAHREN UND SYSTEM ZUM ABSCHÄTZEN DER WINKELPOSITION EINES LENKRADS AN EINEM KRAFTFAHRZEUG

METHOD AND SYSTEM FOR ESTIMATING THE ANGULAR POSITION OF A STEERING WHEEL ON A MOTOR VEHICLE

(84) Etats contractants désignés:
**AT BE BG CH CY CZ DE DK EE ES FI FR GB GR HU IE IT LI LU MC NL PT RO SE SI SK TR**

(30) Priorité: **25.02.2003 FR 0302300**

(43) Date de publication de la demande:
**23.11.2005 Bulletin 2005/47**

(73) Titulaire: **RENAULT S.A.S.**
**92100 Boulogne Billancourt (FR)**

(72) Inventeurs:
• **GUEGAN, Stéphane**
  **F-75002 Paris (FR)**
• **LEMINOUX, Gérald**
  **F-78960 Longnes (FR)**
• **QUIOT, Jean-Marc**
  **F-92100 Boulogne Billancourt (FR)**

(56) Documents cités:
| EP-A- 0 353 995 | EP-A- 0 460 582 |
| FR-A- 2 811 077 | US-A- 5 029 466 |
| US-A- 5 732 369 | US-A- 6 078 851 |
| US-A- 6 082 171 | |

**Description**

La présente invention concerne un procédé et un système d'estimation de la position angulaire d'un volant et en particulière un volant de véhicule.

La position angulaire d'un volant de véhicule automobile est nécessaire à de multiples applications embarquées sur les véhicules automobiles, comme les dispositifs électroniques de stabilité ou ESP, pour lesquelles il faut déterminer la position angulaire du volant en tenant compte du nombre relatif de tours (car il peut être positif ou négatif suivant le sens de rotation) effectués par le volant, et ce dans un délai aussi court que possible.

On a déjà imaginé diverses solutions pour estimer ou calculer cette position angulaire réelle du volant d'un véhicule automobile.

Certaines solutions proposent des capteurs multi-tours, capables de fournir cette position angulaire réelle du volant. C'est ainsi que la demande de brevet français N°2800347 propose un système à intégrer dans le capteur d'angle, qui permet de repérer l'indice du tour dans lequel se trouve le volant.

Ces solutions apparaissent coûteuses et souvent bruyantes.

D'autres solutions proposent une initialisation de la position angulaire du volant donnée par un capteur mono-tour, à partir des capteurs de vitesses de roues.

Le brevet US 4803629 initialise la position angulaire du volant lorsque la vitesse du véhicule est supérieure à un seuil, et considère alors que la position angulaire du volant est nécessairement comprise entre -180° et +180°.

Cette solution ne permet pas de disposer d'informations sur la position angulaire du volant pour des vitesses du véhicule inférieures à la vitesse de seuil, et l'information n'est pas fiable, car il peut exister des situations pour lesquelles l'ESP a besoin de connaître la valeur exacte de la position angulaire du volant, qui peut être supérieure à un demi-tour même à vitesse élevée du véhicule, supérieure à la vitesse de seuil.

Le brevet US 6082171 propose de détecter, à partir des vitesses des roues, le moment où les roues sont en position de ligne droite, et alors d'initialiser la position angulaire du volant à zéro.

Cette solution ne permet pas de connaître la position angulaire du volant tant que celui-ci n'est pas passé par sa position centrée, or cela peut être trop tard dans certaines situations comme des départs avec le volant braqué.

Le brevet EP 0460582 estime la position angulaire du volant à partir des vitesses des roues avants.

Cette solution présente un inconvénient majeur, car les roues avants sont souvent dans des situations dans lesquelles l'estimation n'est pas possible, et le calcul à partir des roues avants est nettement plus sensible aux erreurs de mesure. De plus la formule d'estimation n'est valable qu'autour de la position centrée du volant, ce qui rend l'estimation impossible ou non fiable lors de départs avec le volant braqué par exemple.

La demande de brevet Français N° 2811077 détecte, à partir de données sur les roues directrices, que la position angulaire du volant est comprise entre -180° et +180°, et initialise alors la position angulaire du volant.

Cette solution rend impossible l'initialisation de la position angulaire du volant lors d'un démarrage avec un volant braqué de plus d'un demi-tour, durant un temps indéterminé, tant que le volant n'est pas revenu dans une situation détectable. De plus, le calcul de la position angulaire du volant à partir des roues avants est nettement plus sensible aux erreurs de mesure.

Le document US-A-6,078,851 décrit un procédé de contrôle de la validité des mesures effectuées. Ce contrôle de validité est fait en observant la distribution des angles mesurés et en vérifiant que la probabilité d'occurrence des angles mesurés reste au dessus d'un certain seuil.

Le document US-A-5,029,466 décrit un procédé d'estimation de la position angulaire d'un véhicule automobile dans lequel la position angulaire du volant mesurée par un capteur est comparée à une estimation faite à partir des vitesses angulaires des roues arrières.

Ces solutions ne permettent donc pas une estimation fiable et rapide en toutes circonstances de la position angulaire du volant.

L'invention a pour objet d'estimer la position angulaire d'un volant de véhicule automobile de manière fiable et rapide.

Le procédé de l'invention permet d'effectuer l'estimation de la position angulaire d'un volant de véhicule automobile équipé d'une unité électronique de calcul et de moyens pour fournir les vitesses de rotation des roues arrières du véhicule. Le procédé permet d'estimer la position angulaire du volant à partir des vitesses de rotation des roues arrières du véhicule dans lequel on calcule les vitesses moyennes de rotation des roues arrières sur un nombre prédéterminé de valeurs de mesure de vitesse de rotation respectives et l'on vérifie la rotation des roues arrières, l'estimation de la vitesse angulaire du volant étant effectuée dés que chacune des vitesses moyennes de rotation des roues arrières dépasse une première valeur de seuil et que la différence et la somme des vitesses moyennes de rotation des roues arrières sont différentes d'une deuxième valeur de seuil; et
on vérifie que le rapport des vitesses de rotation des roues arrières est inférieur à une troisième valeur de seuil, correspondant à un angle du volant maximum autorisé, en dessous de laquelle on effectue l'estimation de la position angulaire du volant, la troisième valeur de seuil est donnée par la relation:

$$(L/\tan(\alpha_{\text{volant MAX}}/\text{dem})+E/2)/(L/\tan(\alpha_{\text{volant MAX}}/\text{dem})-E/2)$$

dans laquelle:

$\alpha_{\text{volant MAX}}$ : position angulaire maximum du volant en radians
dem : rapport de démultiplication entre le volant et les roues directrices
L : empattement du véhicule en mètres
E : voie du véhicule en mètres.

Dans un mode de mise en oeuvre préféré, on calcule la position angulaire du volant au moyen de la relation :

$$\alpha_{volant} = dem \times \arctan\left[\frac{2L}{E}\left(\frac{\omega_{2ext}-\omega_{2int}}{\omega_{2ext}+\omega_{2int}}\right)\right]$$

dans laquelle :

$\alpha_{\text{volant}}$ : position angulaire du volant, en radians
dem : rapport de démultiplication entre le volant et les roues directrices
L : empattement du véhicule, en mètres
E : voie du véhicule, en mètres
$\omega_{2ext}$ : vitesse de rotation de la roue arrière extérieure au virage, en radians/seconde
$\omega_{2int}$ : vitesse de rotation de la roue arrière intérieure au virage, en radians/seconde

Avantageusement, la deuxième valeur de seuil est égale à zéro.
Dans un mode de mise en oeuvre préféré, la première valeur de seuil est égale à 1,32 rad/s.
Avantageusement, on calcule les vitesses moyennes de rotation des roues arrières sur les cinq dernières données successives transmises par des capteurs de vitesse de rotation des roues arrières.
Dans un mode de mise en oeuvre préféré, on calcule la vitesse de rotation du volant à partir de deux dernières positions angulaires estimées, et l'on compare la vitesse de rotation du volant avec une quatrième valeur de seuil, au-dessus de laquelle la dernière position angulaire du volant calculée est invalidée.
Avantageusement, la quatrième valeur de seuil est égale à 1000˚/s.
Dans un mode de mise en oeuvre préféré, on vérifie qu'un nombre prédéterminé des dernières estimations successives de la position angulaire du volant se sont déroulées sans défaut pour valider une position angulaire estimée.
Dans un autre mode de mise en oeuvre, on compare la valeur de la position angulaire du volant évaluée à celle fournie par le capteur mono-tour, si leur différence est supérieure à une valeur limite au moins durant une période prédéterminée, on considère que la valeur fournie par le capteur mono-tour est invalide, et les dispositifs du véhicule qui utilisent cette information passent en mode dégradé.
Avantageusement, la valeur limite est 100˚.
En outre, la période prédéterminée est égale à 5 secondes.
Le système de l'invention permet d'estimer la position angulaire d'un volant de véhicule automobile, et comprend une unité électronique de calcul, et des moyens pour fournir les vitesses de rotation des roues arrières du véhicule. L'unité électronique de calcul comprend des moyens de calcul adaptés pour estimer la position angulaire du volant à partir des vitesses de rotation des roues arrières du véhicule fournies par les moyens pour fournir les vitesses de rotation des roues arrières du véhicule caractérisé en ce que les moyens de calcul sont adaptés pour calculer les vitesses moyennes de rotation des roues arrières sur un nombre prédéterminé de valeurs de mesure de vitesse de rotation respectives et vérifier la rotation des roues arrières, l'estimation de la vitesse angulaire du volant étant effectuée dés que chacune des vitesses moyennes de rotation des roues arrières dépasse une première valeur de seuil et que la différence et la somme des vitesses moyennes de rotation des roues arrières sont différentes d'une deuxième valeur de seuil; et vérifier que le rapport des vitesses de rotation des roues arrières est inférieur à une troisième valeur de seuil, correspondant à un angle du volant maximum autorisé, en dessous de laquelle on effectue l'estimation de la position angulaire du volant, la troisième valeur de seuil est donnée par la relation:

$$(L/tan(\alpha_{\text{volant MAX}}/dem)+E/2)/(L/tan(\alpha_{\text{volant MAX}}/dem)-E/2)$$

dans laquelle :

$\alpha_{\text{valant MAX}}$ : position angulaire maximum du volant en radians
dem : rapport de démultiplication entre le volant et les roues directrices
L : empattement du véhicule en mètres
E : voie du véhicule en mètres.

Dans un premier mode de réalisation, le système comprend un capteur mono-tour de la position angulaire du volant. Le système comprend également des moyens de calcul adaptés pour combiner la valeur de la position angulaire du volant fournie par le capteur mono-tour et le nombre relatif du tour dans lequel se trouve le volant calculé à partir de l'estimation de la position angulaire du volant.

Dans un autre mode de réalisation, le système comprend un capteur mono-tour de la position angulaire du volant. Le système comprend également des moyens de calcul adaptés pour comparer la position angulaire du volant fournie par le capteur mono-tour et la position angulaire du volant estimée à partir des vitesses de rotation des roues arrières. Lorsque leur différence est supérieure à une valeur limite au moins durant une période prédéterminée, l'information donnée par le capteur mono-tour est considérée comme non valide, et le système commande à des dispositifs utilisant cette position angulaire de passer en mode de fonctionnement dégradé.

D'autres buts, caractéristiques et avantages de l'invention apparaîtront à la lecture de la description suivante, donnée uniquement à titre d'exemple nullement limitatif, et faite en référence aux dessins annexés sur lesquels :

- la figure 1 est un schéma synoptique d'un système d'estimation de la position angulaire d'un volant de véhicule automobile selon l'invention.
- la figure 2 est un schéma synoptique permettant d'expliquer le principe de l'estimation.

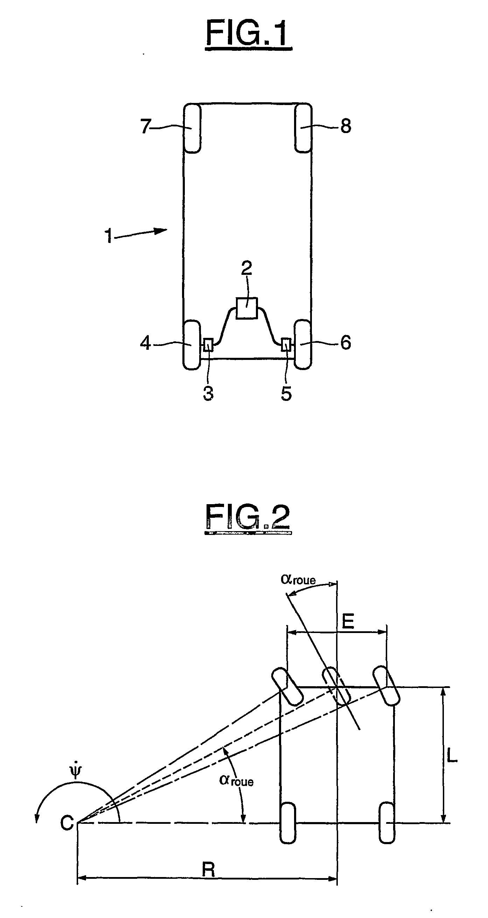

Sur la figure 1, on a représenté l'architecture générale d'un véhicule automobile 1, selon l'invention, qui comrend une unité électronique de calcul 2, un capteur 3 arrière gauche de la vitesse de rotation de la roue arrière gauche 4 du véhicule 1, et un capteur 5 arrière droit de la vitesse de rotation de la roue arrière droite 6 du véhicule 1.

L'unité électronique de calcul 2 comprend tous les moyens matériels et logiciels permettant d'estimer la position angulaire du volant, comme cela sera décrit par la suite. Elle comprend en particulier des moyens pour estimer la position angulaire du volant à partir des vitesses de rotation angulaires des roues arrières du véhicule, au moyen d'un procédé d'estimation que la figure 2 permet de décrire.

La figure 2 décrit les différentes variables utiles à l'élaboration de la formule d'estimation de la position angulaire du volant à partir des vitesses de rotation des roues arrières 4 et 6 du véhicule 1, à savoir:

- $C$ : centre de courbure de la trajectoire
- $\dot{\psi}$ : vitesse de lacet
- $r_{ij}$ : rayon de roulement de la roue ij
- $V_{ij}$ : vitesse linéaire de la roue ij

avec pour convention pour les indices : 1 à l'avant, 2 à l'arrière, ext à l'extérieur et int à l'intérieur par rapport au centre de courbure C.

On effectue les hypothèses suivantes :

- H1 : les roues roulent sans glisser
- H2 : on néglige les phénomènes de dérive des pneus

On peut écrire :

$$\tan(\alpha_{\text{roue}}) = \frac{L}{R} \qquad \text{avec} \qquad \alpha_{\text{volant}} = \alpha_{\text{roue}} * dem$$

où *dem* est le rapport de démultiplication entre le volant et les roues avants (fonction connue de la position des roues) on a de plus:

$$R = \frac{R_{2ext} + R_{2int}}{2} \quad et \quad E = R_{2ext} - R_{2int}$$

d'où :

$$\tan\left(\frac{\alpha_{volant}}{dem}\right) = \frac{2L}{R_{2ext} + R_{2int}} * \frac{R_{2ext} - R_{2int}}{E}$$

Or

$$V_{ij} = r_{ij}\,\omega_{ij} = R_{ij}\,\dot{\psi}$$

On a donc:

$$\tan\left(\frac{\alpha_{volant}}{dem}\right) = \frac{2L}{E}\left(\frac{R_{2ext} - R_{2int}}{R_{2ext} + R_{2int}}\right)$$

et en utilisant

$$R_{ij} = \frac{r_{ij}\,\omega_{ij}}{\dot{\psi}}$$

On obtient :

$$\tan\left(\frac{\alpha_{volant}}{dem}\right) = \frac{2L}{E}\left(\frac{r_{2ext}\,\omega_{2ext} - r_{2int}\,\omega_{2int}}{r_{2ext}\,\omega_{2ext} + r_{2int}\,\omega_{2int}}\right)$$

On introduit le taux de déséquilibre des développées

$$\varepsilon : \quad \varepsilon = \frac{r_{2ext} - r_{2int}}{r_{2ext} + r_{2int}}$$

Et l'on obtient ;

$$\tan\left(\frac{\alpha_{volant}}{dem}\right) = \frac{2L}{E}\left(\frac{D + \varepsilon}{1 + D\varepsilon}\right) \quad avec \quad D = \frac{\omega_{2ext} - \omega_{2ext}}{\omega_{2ext} + \omega_{2ext}}$$

Or $|D| < 1$, donc dans le cadre des hypothèses, on commet une erreur inférieure à $\varepsilon\%$ en prenant :

$$\tan\left(\frac{\alpha_{volant}}{dem}\right) = \frac{2L}{E}\left(\frac{\omega_{2ext} - \omega_{2int}}{\omega_{2ext} + \omega_{2int}} + \varepsilon\right)$$

Or l'incertitude sur le taux de déséquilibre des développées ε, dû au fait que l'on ne connaît pas parfaitement le rayon de roulement des roues arrières conduit à considérer que les deux rayons de roulement des roues arrières sont égaux, et que par conséquent ε=0.

On obtient donc une estimation de la position angulaire du volant par la relation :

$$\alpha_{volant} = dem.\arctan\left[\frac{2L}{E}\left(\frac{\omega_{2ext} - \omega_{2int}}{\omega_{2ext} + \omega_{2int}}\right)\right]$$

Plusieurs vérifications sont faites par l'unité électronique de calcul 2.

Tout d'abord, on vérifie que les roues arrières 4 et 6 sont en rotation par comparaison des vitesses de rotation des roues arrières 4 et 6 avec une valeur de seuil égale à 0, car il faut que le véhicule 1 soit en mouvement. En cas de blocage de l'une des roues arrières 4 ou 6, aucune estimation n'est possible. Afin de s'affranchir des imperfections des capteurs 3 et 5 des vitesses de rotation des roues arrières 4 et 6, ce seuil peut être monté à 1,32 rad/s. Les vitesses de roues arrières 4 et 6, lorsqu'elles sont issues d'une unité électronique de calcul 2, sont rafraîchies périodiquement, par exemple toutes les 40 ms. Ce pas d'échantillonnage implique qu'une valeur erronée de la vitesse de rotation sera maintenue pendant un pas d'échantillonnage. Pour en limiter les conséquences, il faut moyenner la valeur des vitesses de rotations des roues arrières 4 et 6 sur plusieurs valeurs. En d'autres termes, on filtre les vitesses de rotation des roues arrières 4 et 6 avant de réaliser une évaluation de la position angulaire du volant. On pourra prendre, par exemple, des moyennes sur les cinq dernières valeurs reçues, et ne pas effectuer de calcul de la position angulaire du véhicule tant que l'une des vitesses de rotation moyennes d'une des deux roues arrières est inférieure à 1,32 rad/s, ou que la somme ou la différence des moyennes des vitesses de rotation des roues arrières est nulle.

Ensuite, on vérifie que le rapport des vitesses des roues arrières est inférieur à une valeur maximale. En effet, la réalisation des deux premières hypothèses d'estimation effectuées sous entend que la différence des vitesses de rotation des roues arrières 4 et 6 est uniquement due au déplacement du véhicule 1 et au braquage des roues avants 7 et 8. Dans ce cas, la différence maximale des vitesses de rotation des roues arrières dépend uniquement des caractéristiques géométriques du véhicule 1 et des éléments constituant la direction. Par conséquent, si le rapport des vitesses de rotation des roues arrières dépasse une valeur maximale théorique (Rapport$_{MAx}$) correspondant à une position angulaire maximale du volant ($\alpha_{volantMAX}$), alors on interdit une mise à jour de l'estimation de la position angulaire du volant. On a :

$$\frac{\omega_{2ext}}{\omega_{2int}} = \left((R + E/2)/(R - E/2)\right)$$

avec:

$\omega_{2ext}$ : vitesse de rotation de la roue arrière extérieure au virage, en radians/s

$\omega_{2int}$ : vitesse de rotation de la roue arrière intérieure au virage, en radians/s

or

$$R = L/\tan\left(\alpha_{roue}\right) \quad et \quad \alpha_{roue} = \alpha_{volant}/dem$$

d'où :

$$Rapport_{MAX} = \frac{\left(L/\tan\left(\alpha_{volantMAX}/dem\right)+E/2\right)}{\left(L/\tan\left(\alpha_{volantMAX}/dem\right)-E/2\right)}$$

et

$$\frac{\omega_{2ext}}{\omega_{2int}} \leq \frac{\left(L/\tan\left(\alpha_{volantMAX}/dem\right)+E/2\right)}{\left(L/\tan\left(\alpha_{volantMAX}/dem\right)-E/2\right)}$$

On vérifie ensuite que la vitesse angulaire du volant calculée à partir des deux dernières valeurs de positions angulaires du volant est compatible avec une valeur de seuil, que l'on prend, par exemple, égale à 1000˚/s. Si la vitesse de rotation du volant, calculée à partir de la dernière estimation de la position angulaire du volant, est supérieure à cette valeur seuil, la dernière position angulaire du volant estimée est invalidée.

Enfin, on vérifie la stabilité des conditions d'estimation, à savoir si les dernières estimations de la position angulaire du volant se sont effectuées sans défauts. A cet effet, on vérifie si l'ensemble des précédentes vérifications ont été réalisées pour, par exemple, les sept dernières valeurs de vitesses de rotation des roues arrières, et alors seulement on considère que la position angulaire du volant est correctement estimée.

Ce procédé d'estimation de la position angulaire du volant d'un véhicule automobile peut être mis en oeuvre pour être combiné avec l'utilisation d'un capteur mono-tour. En effet, un capteur mono-tour fournit une position angulaire du volant valable à 2Π radians ou 360˚ près. Autrement dit pour un volant pouvant aller de -1000˚ à +1000˚, le capteur mono-tour indiquera 10˚ si la position angulaire du volant est 10˚, 370˚, 730˚, -350˚ ou -710˚. Le capteur mono-tour fournit une valeur de la position angulaire $\alpha_{volant\_mod}$ modulo 2Π radians. L'estimation de l'angle volant fournie par le procédé permet d'estimer le tour dans lequel se trouve le volant en divisant cette estimation par 2Π radians. On combine ensuite la valeur fournie par le capteur mono-tour et le tour volant estimé pour obtenir l'angle volant réel, avec :

$$T = \alpha_{volant} / 2\Pi$$

et

$$\alpha_{réel} = \alpha_{volant\_mod} + (T-1) * 2\Pi \quad si\ T>0$$

$$\alpha_{réel} = \alpha_{volant\_mod} + (T-1) * 2\Pi \quad si\ T^2 0$$

où :

| | |
|---|---|
| T | : indice du tour volant estimé |
| $\alpha_{volant}$ | : position angulaire estimée du volant, en radians |
| $\alpha_{volant\_mod}$ | : position angulaire du volant fournie par le capteur mono-tour, en radians |
| $\alpha_{réel}$ | : position angulaire réelle du volant, en radians |

On obtient donc par combinaison de l'estimation selon le procédé et du résultat du capteur mono-tour, la position angulaire réelle du volant.

Le procédé d'estimation de la position angulaire du volant peut également être mis en oeuvre pour effectuer une comparaison entre la position angulaire du volant issue du capteur et la valeur estimée par le procédé selon l'invention. On compare alors constamment ces deux valeurs, et lorsque leur différence est supérieure à un seuil prédéterminé, par exemple de l'ordre de 100˚, durant une période prédéterminée, par exemple de 5 secondes, alors l'information fournie par le capteur est considérée comme non valide, et les systèmes embarqués qui utilisent cette information doivent alors passer en mode de fonctionnement dégradé.

L'invention permet donc d'utiliser un capteur mono-tour pour mesurer la position angulaire du volant, qui est moins coûteux qu'un capteur multi-tours.

L'invention permet également d'avoir une estimation de la position angulaire du volant qui reste fiable quelle que soit la position réelle du volant, en ligne droite ou braquée.

L'invention permet en outre d'avoir une estimation de la position angulaire du volant dès que la vitesse du véhicule atteint quelques km/h.

De plus, l'invention permet d'écarter les situations où l'estimation de l'angle est mise en défaut, grâce aux vérifications effectuées sur ladite estimation.

**Revendications**

1. Procédé d'estimation de la position angulaire d'un volant de véhicule automobile (1) équipé d'une unité électronique de calcul (2) et de moyens (3,5) pour fournir les vitesses de rotation des roues arrières (4,6) du véhicule, dans lequel on estime la position angulaire du volant à partir des vitesses de rotation des roues arrières (4,6) du véhicule, **caractérisé par le fait que**

   - on calcule les vitesses moyennes de rotation des roues arrières (4,6) sur un nombre prédéterminé de valeurs de mesure de vitesse de rotation respectives et l'on vérifie la rotation des roues arrières (4,6), l'estimation de la position angulaire du volant étant effectuée dès que chacune des vitesses moyennes de rotation des roues arrières (4,6) dépasse une première valeur de seuil et que la différence et la somme des vitesses moyennes de rotation des roues arrières (4,6) sont différentes d'une deuxième valeur de seuil ; et
   - on vérifie que le rapport des vitesses de rotation des roues arrières (4,6) est inférieur à une troisième valeur de seuil, correspondant à un angle du volant maximum autorisé, en dessous de laquelle on effectue l'estimation de la position angulaire du volant, la troisième valeur de seuil est donnée par la relation :

$$\frac{\left(L/\tan\left(\alpha_{volantMAX}/dem\right) + E/2\right)}{\left(L/\tan\left(\alpha_{volantMAX}/dem\right) - E/2\right)}$$

   dans laquelle :

   $\alpha_{volantMAX}$ : position angulaire maximum du volant, en radians
   dem : rapport de démultiplication entre le volant et les roues directrices
   L : empattement du véhicule, en mètres
   E : voie du véhicule, en mètres

2. Procédé d'estimation selon la revendication 1, **caractérisé par le fait que** l'on calcule la position angulaire du volant à partir de la relation :

$$\alpha_{volant} = dem \times \arctan\left[\frac{2L}{E}\left(\frac{\omega_{2ext} - \omega_{2\,int}}{\omega_{2ext} + \omega_{2\,int}}\right)\right]$$

   dans laquelle :

   $\alpha_{volant}$ : position angulaire du volant, en radians
   dem : rapport de démultiplication entre le volant et les roues directrices
   L : empattement du véhicule, en mètres
   E : voie du véhicule, en mètres
   $\omega_{2ext}$ : vitesse de rotation de la roue arrière extérieure au virage, en radians/seconde
   $\omega_{2int}$ : vitesse de rotation de la roue arrière intérieure au virage, en radians/seconde

**3.** Procédé d'estimation selon la revendication 1 ou 2, **caractérisé par le fait que** la deuxième valeur de seuil est égale à zéro.

**4.** Procédé d'estimation selon l'une des revendications 1 à 3, **caractérisé par le fait que** la première valeur de seuil est égale à 1,32 rad/s.

**5.** Procédé d'estimation selon l'une quelconque des revendications 1 à 4, **caractérisé par le fait que** l'on calcule les vitesses moyennes de rotation des roues arrières (4,6) sur les cinq dernières données successives transmises par des capteurs (3,5) de vitesse de rotation des roues arrières (4,6).

**6.** Procédé d'estimation selon l'une quelconque des revendications 1 à 5, **caractérisé par le fait que** l'on calcule la vitesse de rotation du volant à partir de deux dernières positions angulaires estimées, et l'on compare la vitesse de rotation du volant avec une quatrième valeur de seuil, au-dessus de laquelle la dernière position angulaire du volant calculée est invalidée.

**7.** Procédé d'estimation selon la revendication 5, **caractérisé par le fait que** la quatrième valeur de seuil est égale à 1000˚/s.

**8.** Procédé d'estimation selon l'une quelconque des revendications 1 à 7, **caractérisé par le fait que** l'on vérifie qu'un nombre prédéterminé des dernières estimations successives de la position angulaire du volant se sont déroulées sans défaut pour valider une position angulaire estimée.

**9.** Procédé d'estimation selon la revendication 8, **caractérisé par le fait que** l'on vérifie si les sept dernières estimations successives de la position angulaire du volant se sont déroulées sans défaut.

**10.** Procédé d'estimation selon la revendication 8 ou 9, **caractérisé par le fait que** l'on compare la valeur de la position angulaire du volant évaluée à celle fournie par le capteur mono-tour, si leur différence est supérieure à une valeur limite au moins durant une période prédéterminée, on considère que la valeur fournie par le capteur mono-tour est invalide, et les dispositifs du véhicule qui utilisent cette information passent en mode dégradé.

**11.** Procédé d'estimation selon la revendication 10, **caractérisé en ce que** la valeur limite est 100˚.

**12.** Procédé d'estimation selon la revendication 10 ou 11, **caractérisé en ce que** la période prédéterminée est égale à 5 secondes.

**13.** Système d'estimation de la position angulaire d'un volant de véhicule automobile (1) comprenant une unité électronique de calcul (2), et des moyens (3,5) pour fournir les vitesses de rotation des roues arrières (4,6) du véhicule (1), l'unité électronique de calcul comprenant des moyens de calcul adaptés pour estimer la position angulaire du volant à partir des vitesses de rotation des roues arrières (4,6) du véhicule (1) fournies par les moyens (3,5) pour fournir les vitesses de rotation des roues arrières (4,6) du véhicule (1), **caractérisé en ce que** lesdits moyens de calcul étant adaptés pour :

- calculer les vitesses moyennes de rotation des roues arrière (4, 6) sur un nombre prédéterminé de valeurs de mesure de vitesses de rotation respectives et vérifier la rotation des roues arrières (4, 6), l'estimation de la position angulaire du volant étant effective dès que chacune des vitesses moyennes de rotation des roues arrière (4, 6) dépasse une première valeur seuil et que la différence et la somme des vitesses moyennes de rotation des roues arrière (4, 6) sont différentes d'une deuxième valeur de seuil, et
- vérifier que le rapport des vitesses de rotation des roues arrières (4,6) est inférieur à une troisième valeur de seuil, correspondant à un angle du volant maximum autorisé, en dessous de laquelle on effectue l'estimation de la position angulaire du volant, la troisième valeur de seuil est donnée par la relation :

$$\frac{\left(L/\tan(\alpha_{volantMAX}/dem) + E/2\right)}{\left(L/\tan(\alpha_{volantMAX}/dem) - E/2\right)}$$

dans laquelle :

$\alpha_{volantMAX}$ : position angulaire maximum du volant, en radians
dem : rapport de démultiplication entre le volant et les roues directrices
L : empattement du véhicule, en mètres
E : voie du véhicule, en mètres.

14. Système selon la revendication 13, **caractérisé par le fait qu'**il comprend un capteur mono-tour de la position angulaire du volant et des moyens de calcul adaptés pour combiner la valeur de la position angulaire du volant fournie par le capteur mono-tour et le nombre relatif du tour dans lequel se trouve le volant calculé à partir de l'estimation de la position angulaire du volant.

15. Système selon la revendication 13, **caractérisé par le fait qu'**il comprend un capteur mono-tour de la position angulaire du volant et des moyens de calcul adaptés pour comparer la position angulaire du volant fournie par le capteur mono-tour et la position angulaire du volant estimée à partir des vitesses de rotation des roues arrières (4,6), et lorsque leur différence est supérieure à une valeur limite au moins durant une période prédéterminée, l'information donnée par le capteur mono-tour est considérée comme non valide, et le système commande à des dispositifs utilisant cette position angulaire de passer en mode de fonctionnement dégradé.

**Claims**

1. Method of estimation of the angular position of a motor vehicle steering wheel (1) equipped with an electronic calculation unit (2) and with means (3, 5) for providing the rotation speeds of the rear wheels (4, 6) of the vehicle, in which the angular position of the steering wheel is estimated on the basis of the rotation speeds of the rear wheels (4, 6) of the vehicle, **characterized in that**

   - the mean rotation speeds of the rear wheels (4, 6) are calculated over a predetermined number of respective measurement values of rotation speed and the rotation of the rear wheels (4, 6) is verified, the estimation of the angular position of the steering wheel being performed as soon as each of the mean rotation speeds of the rear wheels (4, 6) exceeds a first threshold value and when the difference and the sum of the mean rotation speeds of the rear wheels (4, 6) are different from a second threshold value; and
   - it is verified that the ratio of the rotation speeds of the rear wheels (4, 6) is less than a third threshold value, corresponding to a maximum permitted steering wheel angle, below which the estimation of the angular position of the steering wheel is performed, the third threshold value is given by the relation:

$$\frac{(L/\tan(\alpha_{steering\ wheelMAX}/dem)+E/2)}{(L/\tan(\alpha_{steering\ wheelMAX}/dem)-E/2)}$$

   in which:

   $\alpha_{steering\ wheelMAX}$: maximum angular position of the steering wheel, in radians
   dem: geardown ratio between the steering wheel and the steerable wheels
   L: wheelbase of the vehicle, in metres
   E: vehicle track, in metres.

2. Method of estimation according to Claim 1, **characterized in that** the angular position of the steering wheel is calculated on the basis of the relation:

$$\alpha_{steering\ wheel} = dem \times \arctan\left[\frac{2L}{E}\left(\frac{\omega_{2ext}-\omega_{2int}}{\omega_{2ext}+\omega_{2int}}\right)\right]$$

   in which:

$\alpha_{\text{steering wheel}}$ : angular position of the steering wheel, in radians
dem : geardown ratio between the steering wheel and the steerable wheels
L : wheelbase of the vehicle, in metres
E : vehicle track, in metres
$\omega_{2\text{ext}}$ : rotation speed of the rear wheel outside the turn, in radians/second
$\omega_{2\text{int}}$ : rotation speed of the rear wheel inside the turn, in radians/second.

3. Method of estimation according to Claim 1 or 2, **characterized in that** the second threshold value is equal to zero.

4. Method of estimation according to one of Claims 1 to 3, **characterized in that** the first threshold value is equal to 1.32 rad/s.

5. Method of estimation according to any one of Claims 1 to 4, **characterized in that** the mean rotation speeds of the rear wheels (4, 6) are calculated over the last five successive data items transmitted by sensors (3, 5) of rotation speed of the rear wheels (4, 6).

6. Method of estimation according to any one of Claims 1 to 5, **characterized in that** the rotation speed of the steering wheel is calculated on the basis of two last estimated angular positions, and the rotation speed of the steering wheel is compared with a fourth threshold value, above which the last angular position calculated of the steering wheel is invalidated.

7. Method of estimation according to Claim 5, **characterized in that** the fourth threshold value is equal to 1000˚/s.

8. Method of estimation according to any one of Claims 1 to 7, **characterized in that** it is verified that a predetermined number of last successive estimations of the angular position of the steering wheel have been conducted without fault so as to validate an estimated angular position.

9. Method of estimation according to Claim 8, **characterized in that** it is verified whether the last seven successive estimations of the angular position of the steering wheel have been conducted without fault.

10. Method of estimation according to Claim 8 or 9, **characterized in that** the value of the evaluated angular position of the steering wheel is compared with that provided by the single-revolution sensor, if their difference is greater than a limit value at least during a predetermined period, it is considered that the value provided by the single-revolution sensor is invalid, and the devices of the vehicle which use this information switch to degraded mode.

11. Method of estimation according to claim 10, **characterized in that** the limit value is 100˚.

12. Method of estimation according to Claim 10 or 11, **characterized in that** the predetermined period is equal to 5 seconds.

13. System for estimating the angular position of a motor vehicle steering wheel (1) comprising an electronic calculation unit (2), and means (3, 5) for providing the rotation speeds of the rear wheels (4, 6) of the vehicle (1), the electronic calculation unit comprising calculation means suitable for estimating the angular position of the steering wheel on the basis of the rotation speeds of the rear wheels (4, 6) of the vehicle (1) that are provided by the means (3, 5) for providing the rotation speeds of the rear wheels (4, 6) of the vehicle (1), **characterized in that** said calculation means are suitable for:

   - calculating the mean rotation speeds of the rear wheels (4, 6) over a predetermined number of respective measurement values of rotation speeds and verifying the rotation of the rear wheels (4, 6), the estimation of the angular position of the steering wheel being effective as soon as each of the mean rotation speeds of the rear wheels (4, 6) exceeds a first threshold value and when the difference and the sum of the mean rotation speeds of the rear wheels (4, 6) are different from a second threshold value, and
   - verifying that the ratio of rotation speeds of the rear wheels (4, 6) is less than a third threshold value, corresponding to a maximum permitted steering wheel angle, below which the estimation of the angular position of the steering wheel is performed, the third threshold value is given by the relation:

$$\frac{(L/\tan(\alpha_{\text{steering wheelMAX}}/\text{dem})+E/2)}{(L/\tan(\alpha_{\text{steering wheelMAX}}/\text{dem})-E/2)}$$

in which:

$\alpha_{\text{steering wheelMAX}}$: maximum angular position of the steering wheel, in radians
dem: geardown ratio between the steering wheel and the steerable wheels
L: wheelbase of the vehicle, in metres
E: vehicle track, in metres.

**14.** System according to Claim 13, **characterized in that** it comprises a single-revolution sensor for the angular position of the steering wheel and calculation means suitable for combining the value of the angular position of the steering wheel as provided by the single-revolution sensor and the relative number of the revolution which the steering wheel is in, calculated on the basis of the estimation of the angular position of the steering wheel.

**15.** System according to Claim 13, **characterized in that** it comprises a single-revolution sensor for the angular position of the steering wheel and calculation means suitable for comparing the angular position of the steering wheel as provided by the single-revolution sensor and the angular position of the steering wheel as estimated on the basis of the rotation speeds of the rear wheels (4, 6) and when their difference is greater than a limit value at least during a predetermined period, the information given by the single-revolution sensor is considered to be invalid, and the system instructs devices using this angular position to switch to degraded operating mode.

**Patentansprüche**

**1.** Verfahren zum Schätzen der Winkelposition eines Lenkrads eines Kraftfahrzeugs (1), das mit einer elektronischen Recheneinheit (2) und mit Mitteln (3, 5) ausgestattet ist, um die Drehgeschwindigkeiten der Hinterräder (4, 6) des Fahrzeugs zu liefern, bei dem die Winkelposition des Lenkrads ausgehend von den Drehgeschwindigkeiten der Hinterräder (4, 6) des Fahrzeugs geschätzt wird, **dadurch gekennzeichnet, dass**

- die mittleren Drehgeschwindigkeiten der Hinterräder (4, 6) anhand einer vorbestimmten Anzahl von jeweiligen Drehgeschwindigkeitsmesswerten berechnet werden und die Drehung der Hinterräder (4, 6) überprüft wird, wobei die Schätzung der Winkelposition des Lenkrads durchgeführt wird, sobald jede der mittleren Drehgeschwindigkeiten der Hinterräder (4, 6) einen ersten Schwellwert überschreitet und die Differenz und die Summe der mittleren Drehgeschwindigkeiten der Hinterräder (4, 6) sich von einem zweiten Schwellwert unterscheiden; und
- überprüft wird, ob das Verhältnis der Drehgeschwindigkeiten der Hinterräder (4, 6) geringer als ein einem maximal erlaubten Winkel des Lenkrads entsprechender dritter Schwellwert ist, unterhalb dessen die Schätzung der Winkelposition des Lenkrads durchgeführt wird, wobei der dritte Schwellwert durch folgende Beziehung gegeben wird:

$$\frac{\left(L / \tan\left(\alpha_{\text{LenkradMAX}} / \text{dem}\right) + E / 2\right)}{\left(L / \tan\left(\alpha_{\text{LenkradMAX}} / \text{dem}\right) - E / 2\right)}$$

wobei bedeuten:

$\alpha_{\text{LenkradMAX}}$: maximale Winkelposition des Lenkrads, in Radian
dem : Untersetzungsverhältnis zwischen dem Lenkrad und den gelenkten Rädern
L : Achsabstand des Fahrzeugs, in Metern
E : Spur des Fahrzeugs, in Metern.

**2.** Schätzverfahren nach Anspruch 1, **dadurch gekennzeichnet, dass** die Winkelposition des Lenkrads ausgehend von folgender Beziehung berechnet wird:

EP 1 597 133 B1

$$\alpha_{\text{Lenkrad}} = \text{dem} \times \arctan\left[\frac{2L}{E}\left(\frac{\omega_{2\text{ext}} - \omega_{2\text{int}}}{\omega_{2\text{ext}} + \omega_{2\text{int}}}\right)\right]$$

wobei bedeuten:

$\alpha_{\text{Lenkrad}}$ : Winkelposition des Lenkrads, in Radian
dem : Untersetzungsverhältnis zwischen dem Lenkrad und den gelenkten Rädern
L : Achsabstand des Fahrzeugs, in Metern
E : Spur des Fahrzeugs, in Metern
$\omega_{2\text{ext}}$ : Drehgeschwindigkeit des in der Kurve äußeren Hinterrads, in Radian/Sekunde
$\omega_{2\text{int}}$ : Drehgeschwindigkeit des in der Kurve inneren Hinterrads, in Radian/Sekunde.

3. Schätzverfahren nach Anspruch 1 oder 2, **dadurch gekennzeichnet, dass** der zweite Schwellwert gleich Null ist.

4. Schätzverfahren nach einem der Ansprüche 1 bis 3, **dadurch gekennzeichnet, dass** der erste Schwellwert gleich 1,32 rad/s ist.

5. Schätzverfahren nach einem der Ansprüche 1 bis 4, **dadurch gekennzeichnet, dass** die mittleren Drehgeschwindigkeiten der Hinterräder (4, 6) anhand der letzten fünf aufeinanderfolgenden Daten berechnet werden, die von Drehgeschwindigkeitssensoren (3, 5) der Hinterräder (4, 6) übertragen werden.

6. Schätzverfahren nach einem der Ansprüche 1 bis 5, **dadurch gekennzeichnet, dass** die Drehgeschwindigkeit des Lenkrads ausgehend von zwei letzten geschätzten Winkelpositionen berechnet wird, und die Drehgeschwindigkeit des Lenkrads mit einem vierten Schwellwert verglichen wird, oberhalb dessen die letzte berechnete Winkelposition des Lenkrads ungültig gemacht wird.

7. Schätzverfahren nach Anspruch 5, **dadurch gekennzeichnet, dass** der vierte Schwellwert gleich 1000˚/s ist.

8. Schätzverfahren nach einem der Ansprüche 1 bis 7, **dadurch gekennzeichnet, dass** überprüft wird, ob eine vorbestimmte Anzahl der letzten aufeinanderfolgenden Schätzungen der Winkelposition des Lenkrads fehlerlos abgelaufen sind, um eine geschätzte Winkelposition zu validieren.

9. Schätzverfahren nach Anspruch 8, **dadurch gekennzeichnet, dass** überprüft wird, ob die letzten sieben aufeinanderfolgenden Schätzungen der Winkelposition des Lenkrads fehlerlos abgelaufen sind.

10. Schätzverfahren nach Anspruch 8 oder 9, **dadurch gekennzeichnet, dass** der Wert der ermittelten Winkelposition des Lenkrads mit demjenigen verglichen wird, der vom Einumdrehungssensor geliefert wird, dass, wenn ihre Differenz während mindestens einer vorbestimmten Periode über einem Grenzwert liegt, angenommen wird, dass der vom Einumdrehungssensor gelieferte Wert ungültig ist, und die Vorrichtungen des Fahrzeugs, die diese Information nutzen, gehen in den Notbetrieb über.

11. Schätzverfahren nach Anspruch 10, **dadurch gekennzeichnet, dass** der Grenzwert 100˚ ist.

12. Schätzverfahren nach Anspruch 10 oder 11, **dadurch gekennzeichnet, dass** die vorbestimmte Periode gleich 5 Sekunden ist.

13. System zur Schätzung der Winkelposition eines Lenkrads eines Kraftfahrzeugs (1), das eine elektronische Recheneinheit (2) und Mittel (3, 5) zur Lieferung der Drehgeschwindigkeiten der Hinterräder (4, 6) des Fahrzeugs (1) aufweist, wobei die elektronische Recheneinheit Rechenmittel aufweist, die geeignet sind, um die Winkelposition des Lenkrads ausgehend von den Drehgeschwindigkeiten der Hinterräder (4, 6) des Fahrzeugs (1) zu schätzen, die von den Mitteln (3, 5) zur Lieferung der Drehgeschwindigkeiten der Hinterräder (4, 6) des Fahrzeugs (1) geliefert werden, **dadurch gekennzeichnet, dass** die Rechenmittel geeignet sind, um:

- die mittleren Drehgeschwindigkeiten der Hinterräder (4, 6) anhand einer vorbestimmten Anzahl von jeweiligen Drehgeschwindigkeitsmesswerten zu berechnen und die Drehung der Hinterräder (4, 6) zu überprüfen, wobei die Schätzung der Winkelposition des Lenkrads effektiv ist, sobald jede der mittleren Drehgeschwindigkeiten der Hinterräder (4, 6) einen ersten Schwellwert überschreitet und die Differenz und die Summe der mittleren Drehgeschwindigkeiten der Hinterräder (4, 6) sich von einem zweiten Schwellwert unterscheiden, und

- zu überprüfen, ob das Verhältnis der Drehgeschwindigkeiten der Hinterräder (4, 6) geringer als ein einem maximal erlaubten Winkel des Lenkrads entsprechender dritter Schwellwert ist, unterhalb dessen die Schätzung der Winkelposition des Lenkrads durchgeführt wird, wobei der dritte Schwellwert durch die folgende Beziehung gegeben wird:

$$\frac{(L \,/\, \tan(\alpha_{LenkradMAX} \,/\, dem) + E \,/\, 2)}{(L \,/\, \tan(\alpha_{LenkradMAX} \,/\, dem) - E \,/\, 2)}$$

wobei bedeuten:

$\alpha_{LenkradMAX}$ : maximale Winkelposition des Lenkrads, in Radian
dem : Untersetzungsverhältnis zwischen dem Lenkrad und den gelenkten Rädern
L : Achsabstand des Fahrzeugs, in Metern
E : Spur des Fahrzeugs, in Metern.

**14.** System nach Anspruch 13, **dadurch gekennzeichnet, dass** es einen Einumdrehungssensor der Winkelposition des Lenkrads und Rechenmittel aufweist, die geeignet sind, um den vom Einumdrehungssensor gelieferten Wert der Winkelposition des Lenkrads und die relative Zahl der Umdrehung zu kombinieren, in der sich das Lenkrad befindet, berechnet ausgehend von der Schätzung der Winkelposition des Lenkrads.

**15.** System nach Anspruch 13, **dadurch gekennzeichnet, dass** es einen Einumdrehungssensor der Winkelposition des Lenkrads und Rechenmittel aufweist, die geeignet sind, um die vom Einumdrehungssensor gelieferte Winkelposition des Lenkrads und die Winkelposition des Lenkrads zu vergleichen, die ausgehend von den Drehgeschwindigkeiten der Hinterräder (4, 6) geschätzt wird, und wenn ihre Differenz mindestens während einer vorbestimmten Periode über einem Grenzwert liegt, die vom Einumdrehungssensor gegebene Information als ungültig betrachtet wird und das System den diese Winkelposition nutzenden Vorrichtungen befiehlt, in den Notbetriebmodus überzugehen.

## FIG.1

## FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2800347
- US 4803629 A
- US 6082171 A
- EP 0460582 A
- FR 2811077
- US 6078851 A
- US 5029466 A